## Europäisches Patentamt
## European Patent Office
## Office européen des brevets

(11) Veröffentlichungsnummer : **0 093 933**
**B1**

(12) **EUROPÄISCHE PATENTSCHRIFT**

(45) Veröffentlichungstag der Patentschrift :
02.01.86

(21) Anmeldenummer : 83104014.2

(22) Anmeldetag : 23.04.83

(51) Int. Cl.⁴ : **B 23 K   9/09**, G 05 F   1/08

(54) **Impulsschweissgerät für die Schutzgasschweissung.**

(30) Priorität : 07.05.82 DE 3217093

(43) Veröffentlichungstag der Anmeldung :
16.11.83 Patentblatt 83/46

(45) Bekanntmachung des Hinweises auf die Patenterteilung : 02.01.86 Patentblatt 86/01

(84) Benannte Vertragsstaaten :
AT BE CH DE FR GB IT LI LU NL SE

(56) Entgegenhaltungen :
DE-C-  257 729
FR-A- 2 095 923
GB-A- 1 403 995
US-A- 4 246 465
IEEE TRANSACTIONS ON INDUSTRY AND GENERAL
APPLICATIONS, Vol. I GA-2, No. 3, Mai/Juni 1966,
New York J.C. NEEDHAM "Pulsed Current for Ges
Shielded Arc Welding" Seiten 225-227

(73) Patentinhaber : **KOHLENSÄUREWERK DEUTS-
CHLAND GMBH
Melkenweg 1
D-5462 Bad Hönningen (DE)**

(72) Erfinder : **Kunz, Werner
Ickerswarder Strasse 129
D-4000 Düsseldorf (DE)**
Erfinder : **Bröckels, Theo
Untergath 36
D-4150 Krefeld (DE)**

(74) Vertreter : **Selting, Günther, Dipl.-Ing. et al
Deichmannhaus am Hauptbahnhof
D-5000 Köln 1 (DE)**

## Beschreibung

Die Erfindung betrifft ein Impulsschweißgerät für die Schutzgasschweißung, mit einer von einer Gleichstromquelle versorgten, Schalttransistoren enthaltenden Transistorschaltung, die von einem Impulsgenerator gesteuert ist, wobei die Schweißelektrode mit einem Schweißstrom versorgt wird, der sich impulsartig zwischen einem niedrigen Stromwert und einem hohen Stromwert ändert.

Die elektrische Schutzgasschweißung kann entweder mit Gleichstrom oder mit Impulsstrom durchgeführt werden. Die Schweißung mit Impulsstrom hat den Vorteil eines geringeren Leistungsbedarfs, jedoch muß darauf geachtet werden, daß in den Impulspausen der Strom nicht vollständig abgeschaltet wird, sondern ein Ruhestrom mit einem niedrigen Stromwert fließt, damit der zwischen Werkstück und Elektrode vorhandene Lichtbogen nicht abreißt. Bei der Impulsschweißung haben die Stromimpulse eine Folgefrequenz zwischen 25 und 100 Hz. Die zu schaltenden Stromstärken betragen ca. 600 bis 700 A. In den Impulspausen fließt ein Ruhestrom von ca. 100 A. Als Leistungsschalter für die Impulserzeugung können prinzipiell Thyristoren verwendet werden, jedoch bewirken Thyristoren, die zum Schalten derartig hoher Leistungen geeignet sind, Schaltverzögerungen, durch die die Form der Rechteckimpulse verschliffen wird. Zur Aufrechterhaltung des Lichtbogens werden Rechteckimpulse mit steilen Impulsflanken benötigt. Zur Erzeugung dieser Rechteckimpulse eignen sich Transistoren, die ein schnelleres Schaltverhalten haben als Thyristoren. Bei den bekannten Impulsschweißgeräten werden mehrere parallelgeschaltete Leistungs-transistoren benutzt, die von einer Impulsquelle synchron gesteuert sind und jeweils zwischen einem Zustand hoher Leitfähigkeit und einem Zustand niedriger Leitfähigkeit umgeschaltet werden. In dem Zustand niedriger Leitfähigkeit fließt durch die Transistorschaltung und den Lichtbogen ein Ruhestrom von ca. 100 A, während im Zustand hoher Leitfähigkeit der Impulsstrom von z. B. 700 A fließt. Die Höhe dieses Impulsstroms wird im wesentlichen von der Spannung der Gleichstromquelle bestimmt, an die die Reihenschaltung aus den Transistoren und dem Lichtbogen angeschlossen ist. Bei dem hohen Stromwert sind die Transistoren voll durchgeschaltet, so daß an ihnen nur wenig Verlustleistung abfällt. Bei dem niedrigen Stromwert sind die Transistoren dagegen in einen Zustand gesteuert, in dem sie teilweise leitend sind. In diesem Zustand steht an den Leistungstransistoren eine hohe Spannung an, während sie gleichzeitig von einem Laststrom durchflossen werden. Dies bedeutet, daß die Transistoren eine relativ hohe Verlustleistung haben und erhebliche Temperaturen annehmen. Die Transistorschaltung erfordert bei den bekannten Impulsschweißgeräten daher eine aufwendige Wasserkühlung.

Die hohe Verlustleistung der Leistungstransistoren hat zur Folge, daß die bekannten Impulsschweißgeräte sehr schwergewichtig und aufwendig ausgeführt sind, wobei der Impulsteil stets mit dem Gleichstrom-Versorgungsteil baulich vereinigt ist. Insbesondere gibt es keine Zusatzgeräte, die in Verbindung mit Gleichstromschweißanlagen eingesetzt werden können, um diese Gleichstromschweißanlagen auch für die Impulsscheißung benutzen zu können.

Es ist ferner bekannt, einen impulsförmigen Schweißstrom dadurch zu erzeugen, daß in den Schweißstromkreis ein mechanischer Schalter oder Kommutator geschaltet ist, dem ein Strombegrenzungswiderstand parallel geschaltet ist (IEEE Transactions on Industry and General Applications, Vol. IGA-2, No. 3, May/June 1966, Seiten 225 bis 227).

Schließlich ist ein Impulsschweißgerät bekannt (JP-A-75-19 163), das im Schweißstromkreis eine erste Reihenschaltung aus einem Schalttransistor und eine Induktivität und parallel hierzu einen zweiten Strompfad aus einem Strombegrenzungswiderstand und einer weiteren Induktivität enthält. Der Schalttransistor wird von einem Impulsgenerator periodisch in den EIN- und AUS-Zustand geschaltet. Dadurch entsteht ein Schweißstrom in Form eines Impulszuges, dessen Impulse durch die Induktivitäten verschlissen sind. Insbesondere an den Rückflanken der Schweißimpulse entstehen Stromeinbrüche, die zu Unterbrechungen des Schweißbogens führen können.

Der Erfindung liegt die Aufgabe zugrunde, ein Impulsschweißgerät der eingangs genannten Art zu schaffen, bei dem die Transistorschaltung für einen geringen Leistungsbedarf ausgelegt werden kann und bei dem sichergestellt ist, daß keine Unterbrechungen des Schweißbogens auftreten.

Zur Lösung dieser Aufgabe ist erfindungsgemäß vorgesehen, daß die Strompfade der Transistorschaltung und des Widerstandes induktionslos sind und daß der Widerstand eine bifilare Wicklung aufweist.

Bei dem erfindungsgemäßen Impulsschweißgerät werden die Hochleistungs-Schalttransistoren in den Impulspausen, in denen der Ruhestrom mit dem niedrigen Stromwert fließt, in den Sperrzustand gesteuert und somit lediglich zwischen dem Sperrzustand und dem leitenden Zustand umgeschaltet. Der den Schalttransistoren parallelgeschaltete Widerstand ist sowohl während der Impulse als auch während der Impulspausen von einem Strom durchflossen. Zu diesem Strom addieren sich während der Impulse die Ströme der Schalttransistoren. Da die Schalttransistoren in den Impulspausen in den Sperrzustand geschaltet sind, werden sie nur von einem sehr geringen Reststrom durchflossen, so daß die Verlustleistung im Sperrzustand sehr gering ist. Die Schalttransistoren benötigen daher keine Wasserkühlung und kommen mit Luftkühlung aus. Dies hat zur Folge, daß der Impulsteil des Impulsschweißgerätes relativ leichtgewichtig und klein als Zusatzgerät für eine Gleichstromquelle bzw. einen Gleichstrom-Leistungteil ausgebildet werden kann. Es ist damit möglich, die bekannten Gleichstromschweißanlagen mit dem Zusatzgerät auszustatten, um sie zur Impulsschweißung benutzen zu können.

Dadurch, daß die Strompfade der Transistorschaltung und des Widerstandes induktionslos sind, wird die Rechteckform der Schweißstromimpulse nicht durch Induktivitäten verschlissen. Insbesondere entstehen an den Rückflanken der Schweißstromimpulse keine Stromeinbrüche. Hierdurch wird sichergestellt, daß der Schweißbogen nicht unterbrochen wird. Wegen der hohen Stromstärke würden sich induktive Komponenten in den Strompfaden der Schalttransistoren bzw. des Widerstandes nachteilig auf die Form der Stromimpulse auswirken. Zur Vermeidung unbeabsichtigter Induktivitäten weist der Widerstand eine bifilare Wicklung auf, d. h. er ist in mehrere gegensinnig gewickelte Wicklungsteile unterteilt, so daß sich die Induktivitäten der einzelnen Wicklungsteile gegenseitig kompensieren oder auslöschen.

Gemäß einer bevorzugten Ausführungsform der Erfindung sind die Schalttransistoren mit ihren Emittern an einem Pol der Gleichstromquelle und mit ihren Kollektoren an die mit einem Werkstück verbindbare Schweißelektrode angeschlossen. Die Schalttransistoren, die von dem Impulsgenerator angesteuert werden, sind hierbei in Emitterschaltung betrieben. Dies hat den Vorteil, daß eine relativ niedrige Steuerspannung für die Schalttransistoren benötigt wird und daß die Schalttransistoren definierte Schaltpunkte haben, weil die Steuerspannung der Transistoren auf den einen Pol der Gleichstromquelle bezogen ist und nicht auf die sich ändernde Spannung der Schweißelektrode.

Damit auch bereits vorhandene Gleichstromschweißanlagen zur Impulsschweißung benutzt werden können, ist gemäß einer bevorzugten Ausführungsform der Erfindung vorgesehen, daß der Impulsgenerator, die Transistorschaltung, der Widerstand und ggf. eine Kondensatorbatterie in einem an die Gleichstromquelle anschließbaren separaten Gehäuse untergebracht sind.

Die Impulsfolgefrequenz, mit der die Transistorschaltung gesteuert wird und das impuls-Pausen-Verhältnis werden vorzugsweise so eingestellt, daß mit Schutzgasen mit hohem $CO_2$-Anteil und einem geringen Anteil an Edelgasen gearbeitet werden kann, ohne daß der Lichtbogen abreißt.

Im folgenden wird unter Bezugnahme auf die Zeichnungen ein Ausführungsbeispiel der Erfindung näher erläutert.

Es zeigen :

Figur 1 eine schematische Darstellung der Schaltung des Impulsschweißgerätes, und

Figur 2 den Verlauf des Schweißstromes über der Zeit.

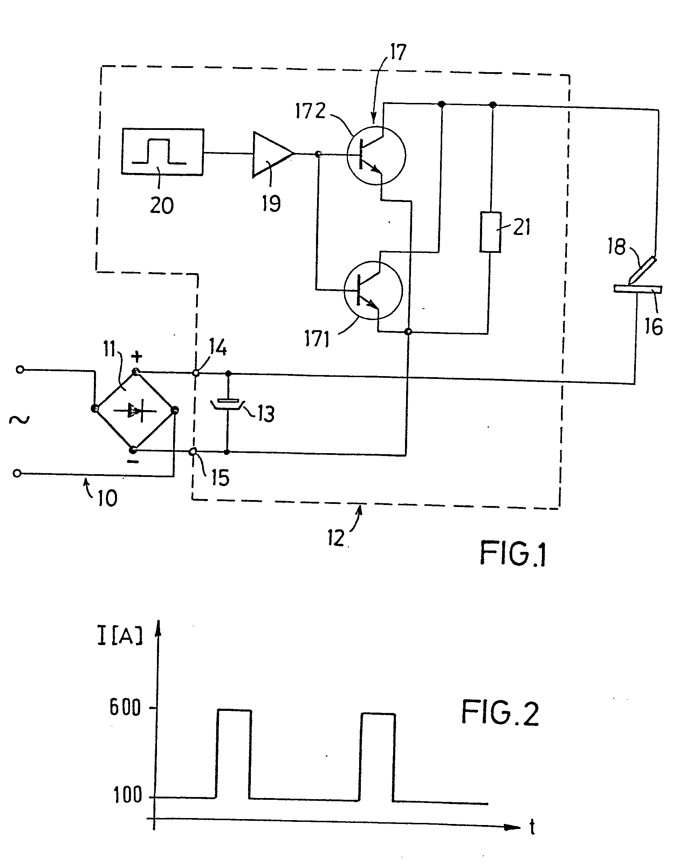

Gemäß Fig. 1 ist eine Gleichstromquelle 10 vorgesehen, die mit Wechselstrom versorgt wird und einen (nicht dargestellten) Transformator sowie einen Brückengleichrichter 11 enthält. Die Gleichstromquelle 10 liefert an ihrem Ausgang eine konstante Spannung. Es handelt sich beispielsweise um ein Gleichstromschweißgerät bekannter Bauart.

An den Ausgang der Gleichstromquelle 10 ist das Gerät 12 angeschlossen, das einen impulsartigen Schweißstrom erzeugt. Dieses Gerät 12 weist zwischen dem positiven Pol 14 und dem negativen Pol 15 der Versorgungsspannung eine Kondensatorbatterie 13 zur Stromglättung auf. Der positive Pol 14 ist an das zu schweißende Werkstück 16 angeschlossen, während der negative Pol an die Emitter der Schalttransistoren 171, 172 angeschlossen ist. In der Transistorschaltung 17 sind mehrere Schalttransistoren, von denen in der Zeichnung nur die beiden Leistungstransistoren 171, 172 dargestellt sind, parallelgeschaltet. Die Kollektoren sämtlicher Schalttransistoren sind untereinander verbunden und an die Schweißelektrode 18 angeschlossen. Die Basen der Schalttransistoren 171, 172 werden über einen Verstärker 19 von dem Impulsgenerator 20 angesteuert. Die Schalttransistoren sind somit in Emitterschaltung betrieben. Der Impulsgenerator 20 liefert Impulse mit einer wählbaren Folgefrequenz zwischen 50 und 300 Hz. Durch die Impulse werden die Schalttransistoren 171, 172 in den leitenden Zustand gesteuert, während sie in den Impulspausen vollständig gesperrt sind. Zur Sperrung kann erforderlichenfalls an die Basen der Schalttransistoren ein Potential gelegt werden, das noch unter dem an den Emittern anstehenden negativen Potential liegt, höchstens aber ein Potential, das gleich dem Emitterpotential ist.

Den Schalttransistoren 171, 172 ist der Widerstand 21 parallelgeschaltet. Dieser Widerstand ist einerseits mit den Emittern und andererseits mit den Kollektoren der Schalttransistoren verbunden. Er besteht aus einer bifilaren Drahtwicklung und hat einen Widerstandswert von z. B. 0,4 $\Omega$. Der Widerstand 21 ist somit in Reihe zu dem zwischen der Schweißelektrode 18 und dem Werkstück 16 entstehenden Lichtbogen zwischen die Klemmen 14 und 15 geschaltet, so daß bei gezündetem Lichtbogen ständig ein Strom durch den Widerstand 21 fließt. Es sei angenommen, daß die Stromstärke des den Widerstand 21 durchfließenden Stroms 100 A beträgt. Der Wert des Widerstandes 21 ist in Stufen veränderbar, um die Stärke des Ruhestromes verstellen zu können.

In Fig. 2 ist das Stromdiagramm des Schweißstromes I bei gezündetem Lichtbogen über der Zeit t dargestellt. In den Impulspausen, also bei gesperrten Leistungstransistoren 171, 172, fließt ein Ruhestrom von 100 A. Während der Impulse, also im leistenden Zustand der Schalttransistoren, erhöht sich die Gesamtstromstärke des Schweißstromes auf 600 A.

Dadurch, daß Induktivitäten weder in dem Strompfad der Schalttransistoren 171, 172 noch in dem Strompfad des Widerstandes 21 vorhanden sind, entsteht ein Impulszug mit guter Rechteckform. Dies ist beim Metall-Aktivgas-Schweißverfahren mit Kohlendioxid und Inertgas von großer Bedeutung, denn die gute Rechteckform der Impulse hat eine definierte und exakte Ablösung der Schweißtropfen von der Schweißelektrode 18 zur Folge.

**Patentansprüche**

1. Impulsschweißgerät für die Schutzgasschweissung, mit einer von einer Gleichstromquelle versorgten, Schalttransistoren (171, 172) enthaltenden Transistorschaltung (17), die von einem Impulsgenerator (20) gesteuert ist, wobei die Schweißelektrode (18) mit einem Schweißstrom versorgt wird, der sich impulsartig zwischen einem niedrigen Stromwert und einem hohen Stromwert ändert, und mit mindestens einem den Schalttransistoren (171, 172) parallelgeschalteten ohmschen Widerstand (21), dadurch gekennzeichnet, daß die Strompfade der Transistorschaltung (17) und des Widerstandes (21) induktionslos sind und daß der Widerstand (21) eine bifilare Wicklung aufweist.

2. Impulsschweißgerät nach Anspruch 1, dadurch gekennzeichnet, daß die Schalttransistoren (171, 172) mit ihren Emittern an einen Pol (14) der Gleichstromquelle (10) und mit ihren Kollektoren an die Schweißelektrode (18) angeschlossen sind.

3. Impulsschweißgerät nach Anspruch 1 oder 2, dadurch gekennzeichnet, daß der Impulsgenerator (20), die Transistorschaltung (17), der Widerstand (21) und ggf. eine Kondensatorbatterie (13) in einem an die Gleichstromquelle (10) angeschlossenen separaten Gerät (12) untergebracht sind.

**Claims**

1. Pulse welder for protective gas welding, comprising a transistor circuit (17) supplied by a d. c. source and containing switching transistors (171, 172), said transistor circuit being controlled by a pulse generator (20), the welding electrode (18) being supplied by a welding current changing pulsewise between a low current value and a high current value, and at least one ohmic resistor (21) connected in parallel to the switching transistors (171, 172) characterized in that the current paths of the transistor circuit (17) and of the resistor (21) are inductionless and that the resistor (21) contains a bifilar winding.

2. Pulse welder according to claim 1, characterized in that the emitters of the switching transistors (171, 172) are connected to a pole (14) of the d. c. source while their collectors are connected to the welding electrode (18).

3. Pulse welder according to claim 1 or 2, characterized in that the pulse generator (20), the transistor circuit (17), the resistor (21) and, if necessary, a capacitor battery (13) are housed in a separate device (12) connected to the d. c. source (10).

**Revendications**

1. Appareil de soudage par impulsions pour le soudage sous atmosphère protectrice comportant un commutateur transistorisé (17) contenant des transistors interrupteurs (171, 172) et alimenté par une source de courant continu, ledit commutateur (17) étant piloté par un générateur d'impulsions (20), l'électrode de soudure (18) étant alimentée par un courant de soudure, qui varie par impulsions entre une basse intensité et une intensité élevée, au moins une résistance ohmique (21) étant montée en parallèle aux bornes des transistors interrupteurs (171, 172), caractérisé par le fait que les voies conductrices de courant du commutateur transistorisé (17) et de la résistance (21) sont non inductives et par le fait que la résistance (21) présente un enroulement bifilaire.

2. Appareil de soudage par impulsions selon la revendication 1, caractérisé par le fait que les transistors interrupteurs (171, 172) sont raccordés par leurs émetteurs à un pôle (14) de la source de courant continu (10) et par leurs collecteurs à l'électrode de soudure (18).

3. Appareil de soudage par impulsions selon l'une des revendications 1 ou 2, caractérisé par le fait que le générateur d'impulsions (20), le commutateur transistorisé (17), la résistance (21) et, le cas échéant, une batterie de condensateurs (13) sont logés dans un appareil séparé (12) raccordé lui-même à la source de courant continu (10).

FIG.1

FIG.2